# EUROPÄISCHE PATENTSCHRIFT

(11) **EP 1 436 960 B1**
(45) Veröffentlichungstag und Bekanntmachung des Hinweises auf die Patenterteilung: **16.12.2009**
(21) Anmeldenummer: 02782943.1
(22) Anmeldetag: 17.10.2002
(51) Int. Cl.: H04L 27/36

(54) **VERFAHREN ZUM MESSEN DES MODULATIONSFEHLERS VON DIGITAL MODULIERTEN HOCHFREQUENZSIGNALEN**
METHOD FOR MEASURING THE MODULATION ERROR IN DIGITAL MODULATED HIGH FREQUENCY SIGNALS
PROCEDE POUR MESURER L'ERREUR DE MODULATION DE SIGNAUX DE HAUTE FREQUENCE MODULES PAR VOIE NUMERIQUE

(30) Priorität: 17.10.2001 DE 10151173
(43) Veröffentlichungstag der Anmeldung: 14.07.2004
(73) Patentinhaber: Rohde & Schwarz GmbH & Co. KG, 81671 München (DE)
(72) Erfinder: MINIHOLD, Roland, 80639 München (DE); WINTER, Albert, 85661 Forstinning (DE)
(74) Vertreter: Körfer, Thomas
(86) Internationale Anmeldenummer: PCT/EP2002/011643
(87) Internationale Veröffentlichungsnummer: WO 2003/034678

(56) Entgegenhaltungen:
- US-A- 5 187 719
- US-A- 5 202 644
- US-A- 5 946 359

## Beschreibung

Die Erfindung betrifft ein Verfahren zum Messen des Modulationsfehlers an einem digital modulierten Hochfrequenzsignal, wie es beispielsweise in modernen Mobilfunk- und Rundfunk-Systemen benutzt wird.

Für derartige Messungen sind Meßgeräte bekannt, in welchen aus der Kenntnis der Bits und den bei der digitalen Modulation des zu messenden Signals benutzten Modulationsparametern wie Modulationsart, Filterfunktion sowie Symbolrate ein ideales Referenzsignal lokal erzeugt wird, mit dem dann das zu messende Signal verglichen wird (z. B. US 5,001,724). Es ist auch schon bekannt, das Referenzsignal im Messgerät unmittelbar aus der Datenfolge des zu messenden Hochfrequenzsignals abzuleiten, und dazu das Hochfrequenzsignal auf eine Zwischenfrequenz herunterzumischen, dann zu digitalisieren und aus der digitalen Datenfolge dann in einem Referenzgenerator das Referenzsignal zu erzeugen (US 5,187,719 und US 5,946,359). Mit einem solchen Modulationsanalysator kann der Modulationsfehler eines beliebig digital modulierten Hochfrequenzsignals getrennt nach Betrag und Phase, als I- und Q-Fehler, Vektorfehlerbetrag oder in polarer Darstellung als Vektor- oder Konstellationsdiagramm gemessen und dargestellt werden.

Ein Nachteil dieser bekannten Meßgeräte ist, daß bei der Messung an Signalen, deren Amplitude digitalseitig im Basisband gemäß einer bekannten Funktion verzerrt ist, beispielsweise auf einen vorgegebenen Clipp-Faktor von 64% begrenzt ist, allein aufgrund dieser Signalverzerrungen bereits ein relativ hoher Modulationsfehler gemessen wird. Wenn mit einem solchen bekannten Meßgerät beispielsweise der Modulationsfehler eines Sender-Leistungsverstärkers gemessen werden soll und dazu ein solches geclipptes Hochfrequenzsignal benutzt wird, bleibt der durch den Leistungsverstärker erzeugte und eigentlich zu messende Modulationsfehler unter dem durch das verzerrte Meßsignal erzeugten Modulationsfehler verdeckt und kann nicht mehr genau gemessen werden. In modernen Funksystemen werden aus verschiedenen Gründen immer häufiger solche gemäß einer bekannten Funktion geclippte Hochfrequenzsignale benutzt, an denen damit solche Modulationsfehlermessungen nicht mehr durchgeführt werden können. Dies gilt insbesondere für geclippte Hochfrequenzsignale, wie sie beispielsweise beim Mobilfunksystem IMT2000 der kommenden Mobilfunkgeneration bzw. beim digitalen Rundfunk und Fernsehen benutzt werden und an denen mit den obengenannten bekannten Meßgeräten unmittelbar der Modulationsfehler von Systemkomponenten gemessen werden soll.

Es ist daher Aufgabe der Erfindung, ein Verfahren aufzuzeigen, mit dem auch der Modulationsfehler an digital modulierten Signalen gemessen werden kann, deren Amplitude digitalseitig auf einen vorgegebenen Clippfaktor begrenzt ist.

Diese Aufgabe wird ausgehend von einem Verfahren laut Oberbegriff des Patentanspruches durch dessen kennzeichnende Merkmale gelöst.

Gemäß der Erfindung werden bei der Erzeugung des idealen Referenzsignals durch Rechnung aus der bekannten Bitfolge des zu messenden Signals nicht nur in bekannter Weise die Modulationsparameter berücksichtigt sondern zusätzlich noch der beim zu messenden Signal benutzte Clippfaktor. Damit bleibt der auf die Verzerrung zurückzuführende gemessene Modulationsfehler minimal und es kann so beispielsweise auch der durch einen Leistungsverstärker einer WCDMA-Basisstation verursachte Modulationsfehler an einem geclippten Signal genau gemessen werden, da er nicht mehr durch den infolge des Clippings hervorgerufenen Modulationsfehler verdeckt wird. Das erfindungsgemäße Verfahren kann sowohl bei Einzelträger- als auch bei Multiträger-Hochfrequenzsignalen, die digital moduliert sind, angewendet werden. Es ist für alle Signale anwendbar, die digitalseitig auf einen vorgegebenen Clipp-Faktor begrenzt sind. Bei WCDMA-Signalen nach dem 3GPP-Standard wird das Basisbandsignal vor der Filterung beispielsweise durch Clipping auf 64% der vollen Amplitude begrenzt, um den Crest-Faktor des Signals möglichst niedrig zu halten, was dem Wirkungsgrad des im Sender verwendeten Leistungsverstärkers zu Gute kommt. Nachdem für die verschiedenen Signalarten, für welche das erfindungsgemäße Verfahren geeignet ist, jeweils unterschiedliche Clipp-Faktoren üblich sind, wird dieser vorzugsweise von Hand in das Meßgerät eingegeben und findet dann bei der Berechnung des Referenzsignals seine entsprechende Berücksichtigung. Das erfindungsgemäße Verfahren ist damit durch einfache Ergänzung beispielsweise beim Signalanalysator FSIQ der Firma Rohde & Schwarz anwendbar, es ist nur noch erforderlich, bei der internen Berechnung des idealen Referenzsignals im Meßgerät diesen vom Benutzer eingegebenen Clipp-Faktor von beispielsweise 64% der vollen Amplitude für WCDMA-Signale einzugeben und so bei der Berechnung des Referenzsignals entsprechend zu berücksichtigen und den Vektor oder die I- bzw. Q-Werte des Referenzsignals entsprechend zurückzurechnen.

Das Hochfrequenzsignal könnte beispielsweise auch durch eine sogenannte Softclipping-Funktion begrenzt sein, die in das Meßgerät eingegeben wird. In gleicher Weise können bei der Erzeugung des Referenzsignals im Meßgerät andere bekannte Signalverzerrungsfunktionen berücksichtigt werden, beispielsweise eine Funktionen zur Komprimierung von Hochfrequenzsignalen, wie sie in modernen Funksystemen aus verschiedenen Gründen zu digitalen Signalaufbereitung benutzt werden.

## Patentansprüche

1. Verfahren zum Messen des Modulationsfehlers an einem digital modulierten Hochfrequenzsignal, bei dem in einem Messgerät aus der bekannten Bit-Folge des zu messenden Signals und den bei der digitalen Modulation benutzten Modulationsparametern ein entsprechend ideales digital moduliertes Referenzsignal lokal berechnet wird, mit dem dann das zu messende Signal verglichen wird,
**dadurch gekennzeichnet,**
**dass** für die Messung an Signalen, deren Amplitude digitalseitig auf einen vorgegebenen Clippfaktor begrenzt ist, dieser vorgegebene Clippfaktor in das Messgerät eingegeben wird und auch das im Messgerät erzeugte ideale Referenzsignal mit diesem vorgegebenen Clippfaktor begrenzt wird.

## Claims

1. Method for measuring the modulation error in a digitally modulated high-frequency signal, in which, from the known bit sequence of the signal to be measured and from the modulation parameters used for the digital modulation, a correspondingly ideal, digitally modulated reference signal, with which the signal to be measured is then compared, is calculated locally in a measuring device,
**characterised in that,**
for the measurement in signals of which the amplitude is limited on the digital side to a predetermined clip factor, this predetermined clip factor is entered into the measuring device, and the ideal reference signal generated in the measuring device is also limited with this predetermined clip factor.

## Revendications

1. Procédé pour mesurer l'erreur de modulation d'un signal haute fréquence modulé de façon numérique, dans lequel, un signal de référence modulé de façon numérique idéal approprié est calculé localement dans un appareil de mesure à partir de la suite de bits connue du signal à mesurer et des paramètres de modulation utilisés lors de la modulation numérique, signal de référence auquel le signal à mesurer sera ensuite comparé,
**caractérisé en ce que**
pour la mesure de signaux, dont l'amplitude est limitée côté numérique à un facteur d'écrêtage prédéterminé, ce facteur d'écrêtage prédéterminé est introduit dans l'appareil de mesure et le signal de référence idéal généré dans l'appareil de mesure est limité par ce facteur d'écrêtage prédétermine.
